# EUROPÄISCHE PATENTSCHRIFT

(11) **EP 0 575 950 B1**
(45) Veröffentlichungstag und Bekanntmachung des Hinweises auf die Patenterteilung: **06.03.1996**
(21) Anmeldenummer: 93109909.7
(22) Anmeldetag: 22.06.1993
(51) Int. Cl.: A61C 17/06, A61C 1/18

(54) **Zahnbehandlungseinheit**
Dental treatment unit
Unité de traitement dentaire

(30) Priorität: 26.06.1992 DE 4220929; 26.06.1992 DE 4220928; 10.03.1993 DE 4307496
(43) Veröffentlichungstag der Anmeldung: 29.12.1993
(73) Patentinhaber: Hatzky, Torsten, DR., W-76810 Landau (DE)
(72) Erfinder: Hatzky, Torsten, DR., W-76810 Landau (DE)
(74) Vertreter: Patentanwälte Dipl.-Ing. F.W. Möll Dipl.-Ing. H.Ch. Bitterich

(56) Entgegenhaltungen:
- EP-A- 0 517 138
- FR-A- 2 284 311
- GB-A- 1 529 124

## Beschreibung

Die Erfindung betrifft eine Zahnbehandlungseinheit (siehe z.B. GB-A-1529124) gemäß dem Oberbegriff des Anspruchs 1.

Bei den allermeisten zahnärztlichen Behandlungsmaßnahmen fallen große Mengen von Flüssigkeit - Kühlflüssigkeit und Speichel - an, die aus dem Mund des Patienten abgesaugt werden müssen. Des weiteren ist zur ordnungsgemäßen Verarbeitung zahnärztlicher Materialien ein möglichst trockenes Arbeitsfeld erforderlich. Moderne Behandlungseinheiten besitzen daher wenigstens ein an eine Saugpumpe angeschlossenes Saugrohr, welches während der Arbeit des Zahnarztes von einer Assistentin gehalten und manipuliert wird.

Obwohl die Entwicklung der zahnmedizinischen Behandlungseinheiten in der letzten Zeit viele Verbesserungen gebracht hat, die es dem Zahnarzt zunehmend ermöglichen, seine Arbeiten auch ohne Assistenz zu verrichten, ist dies bisher bei der Absaugung der Flüssigkeit und der Trockenhaltung des Arbeitsfeldes nicht gelungen. Der Zahnarzt ist daher nach wie vor gezwungen, mit dieser Tätigkeit eine Assistentin zu betrauen, obwohl aufgrund eines zunehmenden Mangels an Fachkräften und eines zunehmenden Zwangs zur Reduzierung der Behandlungskosten damit ein relativ großer Kostenfaktor verknüpft ist. Im übrigen ist das Absaugen der Flüssigkeiten aus der Mundhöhle für eine gelernte Zahnarzthelferin auch eine wenig befriedigende Tätigkeit.

Der vorliegenden Erfindung liegt daher die Aufgabe zugrunde, eine Vorrichtung anzugeben, mit der es dem Zahnarzt möglich ist, auch ohne den Einsatz einer Assistentin Flüssigkeiten aus der Mundhöhle gezielt abzusaugen bzw. das Arbeitsfeld trocken zu halten, ohne daß damit jedoch für den Zahnarzt oder gar den Patienten ein erhöhtes Risiko verbunden wäre.

Diese Aufgabe wird gelöst durch eine gattungsgemäße Behandlungseinheit mit den Merkmalen gemäß Kennzeichen des Anspruchs 1.

Damit ergeben sich die Vorteile, daß der Zahnarzt - nach Lösen der Blockierung - das Saugrohr, das sich in aller Regel am vordersten Segment des multibel beweglichen Gelenkarms befindet, in den Mund des Patienten einbringen kann, wo es nach Blockieren der Gelenke, beispielsweise durch Betätigen eines Fußschalters, in der optimalen Position fixiert wird. Sollte der Patient bei plötzlich auftretenden Schmerzen unkontrollierte Bewegungen ausführen, kann der Zahnarzt durch Betätigung eines Not-Schalters die Gelenkblockierung lösen, so daß Arm und Saugrohr entsprechend ausweichen können. Auf dieselbe Weise kann der Zahnarzt auch nach Beendigung der Behandlung das Saugrohr wieder entfernen.

Es versteht sich, daß zur Erhöhung der Sicherheit die Deblockierung der Gelenke selbsttätig erfolgen kann. Zu diesem Zweck kann am Saugrohr oder an dem das Saugrohr haltenden Gelenk ein Drucksensor angebracht werden.

In diesem Zusammenhang kann es weiterhin vorteilhaft sein, auch einen Feuchtigkeitssensor vorzusehen, der die Absaugpumpe jeweils nur dann einschaltet, wenn sich Flüssigkeit in der Mundhöhle angesammelt hat.

Gemäß einer vorteilhaften Weiterbildung der Erfindung sind in die Gelenke Stellmotoren und Sensoren eingebaut, die an einem Prozeßrechner angeschlossen sind. Vorteil hafterweise besitzen die Stellmotoren einen Auskopplungsmechanismus, der mittels Schalter vom Zahnarzt aktiviert werden kann. Der das Saugrohr und den Saugschlauch haltende Gelenkarm ist in diesem Fall ähnlich aufgebaut wie der Arm der bekannten Fertigungsroboter, die beispielsweise in der Autoproduktion immer gleiche Arbeitsvorgänge, beispielsweise das Lackieren der Karrosserie, durchführen. Genauso wie in der Autoproduktion dem Roboter die auszuführenden Bewegungen in einem vorangehenden Teach-in-Verfahren von einer Bedienungsperson vorgemacht werden, wobei der angeschlossene Prozeßrechner die Bewegungsdaten in seinem internen Speicher ablegt, wird beim erfindungsgemäßen Gelenkarm das Einführen des Saugrohrs in den Mund des Patienten als Teach-in-Verfahren gewertet und die entsprechenden Bewegungen vom Prozeßrechner gespeichert. Sollte nun der Patient unkontrollierte Bewegungen durchführen, die von dem am Gelenkarm angebrachten Drucksensor oder aber von den in die Gelenke integrierten Sensoren aufgenommen werden, aktiviert der Prozeßrechner die in die Gelenke eingebauten Stellmotoren, jedoch in umgekehrter Richtung, worauf das Saugrohr blitzschnell aus dem Mund des Patienten herausfährt, ohne diesen zu verletzen.

Gemäß einer vorteilhaften Weiterbildung der Erfindung ist auch die Kopfstütze des Behandlungsstuhls in das erfindungsgemäße System integriert. In die Kopfstütze integrierte Lage- bzw. Drucksensoren, die ebenfalls an den Prozeßrechner angeschlossen sind, erfassen, ob der Patient seinen Kopf ruhig in der Mitte der Kopfstütze abstützt oder ob er ihn unruhig oder schmerzgepeinigt nach rechts und/oder links dreht. Diese Signale können vom Prozeßrechner derart umgerechnet werden, daß die Mündung des Saugrohrs auch dann im Bereich des Arbeitsfeldes bleibt, wenn der Patient den Kopf dreht. Es kommt also nicht immer zu einer Unterbrechung der Behandlung.

Gemäß einer nochmaligen Weiterbildung der Erfindung weist die Kopfstütze mehrere Segmente auf, wobei diese mittels Elektromotoren bzw. Hydraulik- oder Pneumatikzylindern gegeneinander gesteuert bewegbar sind. Dank dieser Konstruktion kann sich die erfindungsgemäße Kopfstütze exakt an den Kopf des Patienten anpassen, der auf diese Weise exakt positioniert wird. Es ist sogar möglich, bei Behandlungen, bei denen große Kräfte entstehen, beispielsweise Zahnextraktionen, den Kopf des Patienten ausreichend zu stützen. Die derzeit noch nötige Assistentin wird somit auch in diesen Fällen entbehrlich.

Insbesondere in den Fällen, in denen die Kopfstütze bzw. die in diese eingebauten Sensoren zur Steuerung des Gelenkarms herangezogen werden, empfiehlt es sich, den Gelenkarm, der an einer Montageplatte befestigt ist, entweder direkt oder mittels einer getrennten Halterung mit dem Behandlungsstuhl oder der Kopfstütze zu verbinden. Auf diese Weise besteht ein ausreichend einfacher Zusammenhang zwischen der Position des Gelenkarms und der Position des Patientenkopfes, wodurch nicht zuletzt auch die Programmierung des Prozeßrechners vereinfacht wird.

Vorteilhafterweise sind Halterung, Montageplatte und Gelenkarm raumsparend unter die Kopfstütze bzw. die Rückenlehne des Behandlungsstuhls klappbar, wenn sie nicht benötigt werden.

Anhand der Zeichnung soll die Erfindung in Form von Ausführungsbeispielen näher erläutert werden. Es zeigen jeweils in schematischer Darstellung
- Fig. 1: eine Draufsicht auf eine erste Behandlungseinheit mit einem ersten Gelenkarm,
- Fig. 2: eine Draufsicht auf eine zweite Behandlungeinheit mit zwei anderen Gelenkarmen,
- Fig. 3: eine Draufsicht auf eine mehrteilige Kopfstütze und
- Fig. 4: eine Seitenansicht auf eine Behandlungseinheit mit einem Patienten, dessen Kopf durch die Kopfstütze der Fig. 3 gehalten wird.

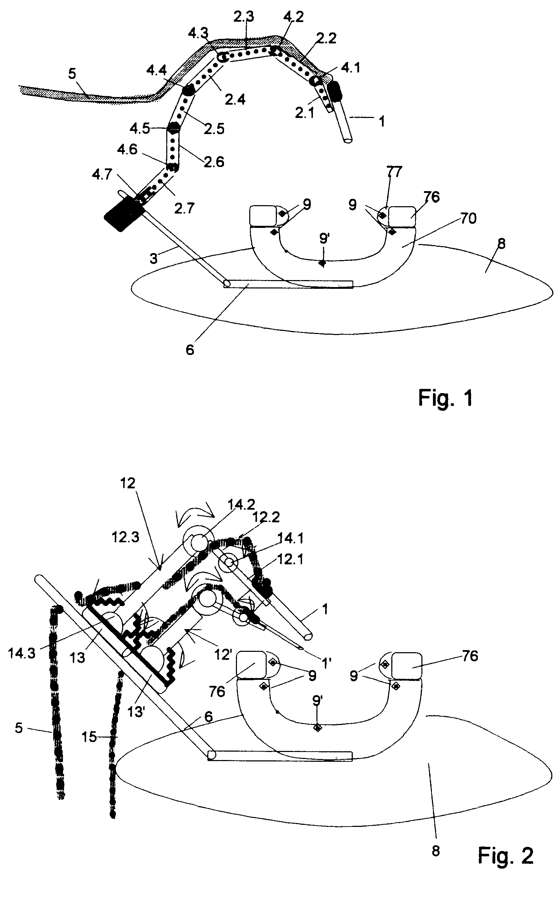

Fig. 1 zeigt als schematische Draufsicht eine erste Behandlungseinheit. Man erkennt einen Behandlungsstuhl 8 mit Kopfstütze 70, die den Kopf des Patienten U-förmig umschließt. Zur verbesserten Seitenführung sind Endsegmente 76 mit Stützkissen 77 vorgesehen.

Eine an der Kopfstütze 70 befestigte Halterung 6 trägt eine Montageplatte 3, an der ein Gelenkarm 2 angelenkt ist. Der Gelenkarm 2 besteht im vorliegenden Beispiel aus insgesamt fünf Segmenten 2.1, 2.2, 2.3, 2.4, 2.5, die mittels Gelenken 4.1, 4.2, 4.3, 4.4, 4.5 untereinander und mit der Montageplatte 3 verbunden sind. Die Form der Segmente 2.1, 2.2, 2.3, 2.4, 2.5 ist im Grunde beliebig; im einfachsten Fall handelt es sich um gerade Teilstücke. In die Gelenke 4.1, 4.2, 4.3, 4.4, 4.5, von denen wenigstens eines, meist das vorderste Gelenk 4.1, mehr als einen Freiheitsgrad der Bewegung besitzt, sind Blockiervorrichtungen eingebaut, die der Zahnarzt per Hand- oder Fußschalter aktivieren und deaktivieren kann. Das vorderste Segment 2.1 des Gelenkarms 2 trägt eine Halterung für ein Saugrohr 1 mit angeschlossenem Saugschlauch 5 zum Absaugen von Kühlflüssigkeit und Speichel aus dem Mund des Patienten.

Um der durch die mechanische Blockierung der Gelenke 4.1 ... 4.5 bedingten Verletzungsgefahr zu begegnen, die immer dann gegeben ist, wenn der Patient schmerzgepeinigt unkontrollierte Kopfbewegungen ausführt, empfiehlt es sich, wenigstens einen vom Zahnarzt zu betätigenden Notschalter, vorzugsweise jedoch einen entsprechenden Drucksensor vorzusehen, der diese Deblockierung steuert. Dieser Drucksensor kann am Saugrohr 1 oder am vordersten Segment 2.1 des Gelenkarms 2 angeordnet sein. Es kann sich aber auch um die in die Kopfstütze 70 eingebauten Sensoren 9, 9' handeln. In jedem Falle wird der Gelenkarm 2 sofort frei beweglich und kann den Lageveränderungen des Patienten folgen bzw. ganz aus dem Mund des Patienten herausschwenken.

Fig. 2 zeigt eine weitere Behandlungseinheit mit Rückenlehne 8, Kopfstütze 70 und Halterung 6. An der letzteren sind in diesem Ausführungsbeispiel zwei Montageplatten 13, 13' montiert, die je einen Gelenkarm 12, 12' tragen. Der Gelenkarm 12 besitzt insgesamt drei Segmente 12.1, 12.2, 12.3, die mit Hilfe von Gelenken 14.1, 14.2, 14.3 untereinander und mit der Montageplatte 13, 13' verbunden sind. In die Gelenke 14.1, 14.2, 14.3 sind Stellmotoren und Bewegungssensoren eingebracht. Die Stellmotoren sind zusätzlich mit einem stellerbaren Auskopplungsmechanismus ausgerüstet. Alles ist mit einem zentralen Prozeßrechner (nicht dargestellt) verbunden, der die Signale der Sensoren auswertet und den Auskopplungsmechanismus und die Stellmotoren entsprechend ansteuert.

Sobald nun der Zahnarzt den Gelenkarm 12, 12' anfaßt, um das Saugrohr 1, 1' in den Mund des Patienten einzuführen, wird über einen beispielsweise in das vorderste Segment 12.1 eingebauten Sensorschalter über den zentralen Prozeßrechner der in die Gelenke eingebaute Auskopplungsmechanismus aktiviert, so daß die Segmente 12.1, 12.2, 12.3 des Gelenkarms 12 frei beweglich werden. Die Gelenkbewegungen werden jedoch von den Bewegungssensoren aufgenommen und an den Prozeßrechner weitergeleitet, wo sie abgespeichert werden. Sobald der Zahnarzt den Gelenkarm 12 losläßt, werden die Gelenke 14.1, 14.2, 14.3 blockiert. Nach dem Starten der Absaugpumpe kann der Zahnarzt ohne Assistenz den Patienten behandeln.

Führt der Patient nun eine unkontrollierte Bewegung aus, wird dies wie schon beschrieben von einem der Sensoren 9, 9' oder beispielsweise durch einen vom Zahnarzt betätigten Fußschalter an den Prozeßrechner gemeldet. Dieser aktiviert die Stellmotoren in den Gelenken derart, daß diese die vom Zahnarzt vorgegebenen Bewegungen, jedoch in umgekehrter Reihenfolge ausführen, worauf das Saugrohr 1 blitzschnell aus dem Mund des Patienten herausgefahren wird, ohne diesen zu verletzen.

Derselbe Bewegungsvorgang findet auch am Ende einer normalen Behandlung statt.

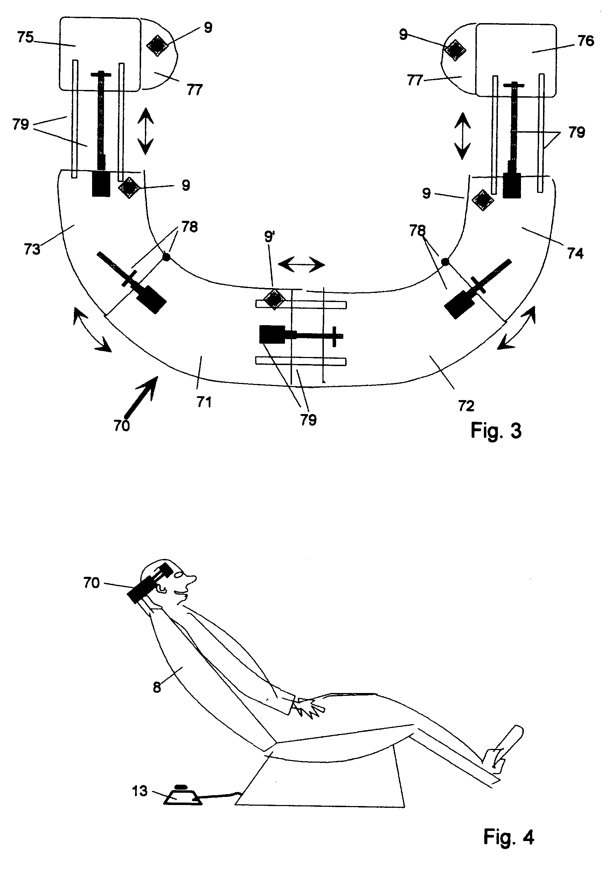

Fig. 3 zeigt die Kopfstütze 70 in vergrößerter Darstellung. Sie besteht aus mehreren Segmenten 71, 72, 73, 74, 75, 76, die mittels motorisch betriebener Drehgelenke 78 und/oder motorisch betriebener Schiebegelenke 79 untereinander in Verbindung stehen. Dabei besitzen die äußersten Segmente 75, 76 die zusätzlichen Kissen 77 auf der Innenseite, die auch aufblasbar sein können. Sobald der Patient seinen Kopf auf den zentral eingebauten Sensor 9' legt, werden sämtliche Stellmotoren in den Gelenken 78, 79 aktiviert, worauf die Segmente 71 ... 76 sich so lange verstellen, bis der Kopf des Patienten allseitig optimal positioniert und fixiert ist. Diesen Vorgang kann der Zahnarzt entweder von Hand steuern oder durch den Prozeßrechner selbsttätig ausführen lassen.

Fig. 4 schließlich zeigt eine Behandlungseinheit in Seitenansicht. Man erkennt den auf dem Behandlungsstuhl sitzenden Patienten, dessen Kopf durch die Kopfstütze 70 gehalten wird. Erkennbar ist ferner der Fußschalter 13, mit dem der Zahnarzt die Steuerung der Gelenkarme und/oder der Kopfstütze aktiviert bzw. deaktiviert.

Es versteht sich, daß der Prozeßrechner unter Verwendung insbesondere der von den in die Kopfstütze 70 eingebauten Sensoren 9, 9' gelieferte Signale den Gelenkarm 12 so steuern kann, daß das Absaugrohr die optimale Position im Mund des Patienten beibehält, auch wenn dieser seinen Kopf bewegt.

Schließlich kann der Prozeßrechner auch zur Steuerung des Absaugvorgangs selbst eingesetzt werden. Mit Hilfe eines am Saugrohr 1, 1' bzw. am vordersten Segment 2.1, 12.1 des Gelenkarms 2, 12 angebrachten Feuchtigkeitssensors kann die Saugpumpe eingeschaltet werden, wenn eine Feuchtigkeitsansammlung gemeldet wird. Auf diese Weise ist die meist mit einem lästigen Geräuschpegel verbundene Absaugpumpe nur dann in Betrieb, wenn dies auch erforderlich ist, bzw. wenn der Zahnarzt auch tatsächlich mit einem flüssigkeitsgekühlten Bohrer arbeitet.

Die die Gelenkarm 2, 12, 12' tragende Halterung 6 ist im übrigen so gestaltet, daß die Gelenkarme, die Montageplatte sowie die Halterung selbst leicht und raumsparend unter die Kopfstütze 8 des Behandlungsstuhls geklappt werden können, wenn die automatische Absaugvorrichtung nicht benötigt wird.

## Patentansprüche

1. Zahnbehandlungseinheit mit einem Behandlungsstuhl (8) und wenigstens einem Saugrohr (1, 11) mit Saugschlauch (5, 15) zum Absaugen von Kühlflüssigkeit und Speichel aus dem Mund des Patienten während der zahnmedizinischen Behandlung, dadurch gekennzeichnet, daß zum Halten und Führen von Saugrohr (1, 11) und Saugschlauch (5, 15) ein Arm (2, 12) vorgesehen ist, daß der Arm (2, 12) mehrere Segmente (2.1, 2.2, 2.3, 2.4, 2.5, 2.6, 2.7) umfaßt, die durch Gelenke (4.1, 4.2, 4.3, 4.4, 4.5, 4.6, 4.7) miteinander und mit dem zahnärztlichen Behandlungsstuhl (8) verbunden sind, daß wenigstens eines der Gelenke (4.1, 4.2, 4.3, 4.4, 4.5, 4.6, 4.7) mehr als einen Freiheitsgrad der Bewegung besitzt und daß in die Gelenke (4.1, 4.2, 4.3, 4.4, 4.5, 4.6, 4.7) eine Blockiervorrichtung eingebaut ist, die mittels Schalter (13) vom Zahnarzt aktiviert und deaktiviert werden kann, und daß eines der Segmente (2.1), vorzugsweise das vorderste, eine Aufnahme für das Saugrohr (1, 11) besitzt.

2. Behandlungseinheit nach Anspruch 1, dadurch gekennzeichnet, daß in die Gelenke (4.1, 4.2, 4.3) Stellmotoren und Sensoren eingebaut sind, die an einen Prozeßrechner angeschlossen sind.

3. Behandlungseinheit nach Anspruch 2, dadurch gekennzeichnet, daß die Stellmotoren einen Auskopplungsmechanismus besitzen, der mittels Schalter (13) vom Zahnarzt aktiviert und deaktiviert werden kann.

4. Behandlungseinheit nach Anspruch 1, 2 oder 3, dadurch gekennzeichnet, daß der Schalter (13) ein Hand- oder Fußschalter oder ein in ein Segment (2.1) des Gelenkarms (2, 12) integrierter Berührungssensor ist.

5. Behandlungseinheit nach einem der Ansprüche 2 bis 4, dadurch gekennzeichnet, daß die Sensoren Bewegungssensoren sind.

6. Behandlungseinheit nach einem der Ansprüche 1 bis 5, dadurch gekennzeichnet, daß in die Kopfstütze (70) des Behandlungsstuhls (8) Lage- bzw. Drucksensoren (9) integriert sind, die an den Prozeßrechner angeschlossen sind.

7. Behandlungseinheit nach Anspruch 6, dadurch gekennzeichnet, daß die Kopfstütze (70) mehrere Segmente (71, 72, 73, 74, 75, 76) besitzt, daß die Segmente (71 ... 76) mittels Elektromotoren (78, 79) bzw. Hydraulik- oder Pneumatikzylinder gegeneinander gesteuert bewegbar sind und daß gegebenenfalls zusätzlich aufblasbare Kissen (77) angebracht sind.

8. Behandlungseinheit nach einem der Ansprüche 1 bis 7, dadurch gekennzeichnet, daß am Saugrohr (1, 11) bzw. dem das Saugrohr (1, 11) haltenden Segment (2.1) ein Drucksensor und/oder ein Feuchtigkeitssensor vorgesehen ist.

9. Behandlungseinheit nach einem der Ansprüche 1 bis 8, dadurch gekennzeichnet, daß der Gelenkarm (2, 12) an einer Montageplatte (3, 13) befestigt ist, die entweder direkt oder mittels einer Halterung (6) mit dem Behandlungsstuhl (8) oder der Kopfstütze (70) verbunden ist.

10. Behandlungseinheit nach Anspruch 9, dadurch gekennzeichnet, daß Halterung (6), Montageplatte (3, 13) und Gelenkarm (2, 12) raumsparend unter die Kopfstütze (70) bzw. die Rückenlehne des Behandlungsstuhls (8) klappbar sind.

## Claims

1. Dental treatment unit with a treatment chair (8) and at least one suction tube (1, 11) with a suction hose (5, 15) for sucking cooling liquid and saliva out of the mouth of the patient during dental treatment, characterised in that an arm (2, 12) is provided to hold and guide the suction tube (1, 11) and the suction hose (5, 15), that the arm (2, 12) comprises a plurality of segments (2.1, 2.2, 2.3, 2.4, 2.5, 2.6, 2.7) which are connected together and to the dental treatment chair (8) by joints (4.1, 4.2, 4.3, 4.4, 4.5, 4.6, 4.7), that at least one of the joints (4.1, 4.2, 4.3, 4.4, 4.5, 4.6, 4.7) has more than one degree of freedom of movement, that a locking device is built into the joints (4.1, 4.2, 4.3, 4.4, 4.5, 4.6, 4.7), which device can be activated and de-activated by the dentist by means of a switch (13), and that one of the segments (2.1), preferably the front one, has a holder for the suction tube (1, 11).

2. Treatment unit according to claim 1, characterised in that servomotors and sensors, which are connected to a process computer, are built into the joints (4.1, 4.2, 4.3).

3. Treatment unit according to claim 2, characterised in that the servomotors have a disengaging mechanism which can be activated and de-activated by the dentist by means of a switch (13).

4. Treatment unit according to claim 1, 2 or 3, characterised in that the switch (13) is a manual or foot-operated switch or a contact sensor which is integrated into a segment (2.1) of the articulated arm (2, 12).

5. Treatment unit according to one of claims 2 to 4, characterised in that the sensors are movement sensors.

6. Treatment unit according to one of claims 1 to 5, characterised in that position or pressure sensors (9), which are connected to the process computer, are integrated into the headrest (70) of the treatment chair (8).

7. Treatment unit according to claim 6, characterised in that the headrest (70) has a plurality of segments (71, 72, 73, 74, 75, 76), that the segments (71 ... 76) can be moved towards one another in a controlled manner by means of electric motors (78, 79) or hydraulic or pneumatic cylinders, and that inflatable cushions (77) may additionally be fitted.

8. Treatment unit according to one of claims 1 to 7, characterised in that a pressure sensor and/or a moisture sensor is/are provided at the suction tube (1, 11) or the segment (2.1) holding the suction tube (1, 11).

9. Treatment unit according to one of claims 1 to 8, characterised in that the articulated arm (2, 12) is secured to a mounting plate (3, 13), which is connected either directly or by means of a holder (6) to the treatment chair (8) or the headrest (70).

10. Treatment unit according to claim 9, characterised in that the holder (6), the mounting plate (3, 13) and the articulated arm (2, 12) can be swung under the headrest (70) or the backrest of the treatment chair (8) so as to save space.

## Revendications

1. Unité de traitement dentaire, avec un fauteuil de traitement (8) et avec au moins un tuyau d'aspiration (1, 11) équipé d'un flexible d'aspiration (5, 15) et destiné à évacuer de la bouche du patient par aspiration le liquide de refroidissement et la salive pendant le traitement dentaire, **caractérisée** en ce qu'un bras (2, 12) est prévu pour maintenir et guider le tuyau d'aspiration (1, 11) et le flexible d'aspiration (5, 15), en ce que le bras (2, 12) comprend plusieurs segments (2.1, 2.2, 2.3, 2.4, 2.5, 2.6, 2.7) qui sont reliés entre eux et au fauteuil de traitement dentaire (8) par des articulations (4.1, 4.2, 4.3, 4.4, 4.5, 4.6, 4.7), en ce qu'au moins une des articulations (4.1, 4.2, 4.3, 4.4, 4.5, 4.6, 4.7) possède plus d'un degré de liberté de mouvement, en ce qu'un dispositif de blocage est incorporé dans les articulations (4.1, 4.2, 4.3, 4.4, 4.5, 4.6, 4.7), dispositif qui peut être activé et désactivé par le dentiste au moyen d'un commutateur (13), et en ce qu'un des segments (2.1), de préférence le segment le plus avant, possède un réceptacle pour le tuyau d'aspiration (1, 11).

2. Unité de traitement dentaire selon la revendication 1, **caractérisée** en ce que des servomoteurs et des capteurs sont incorporés dans les articulations ( 4.1, 4.2, 4.3), et ils sont reliés à un calculateur de processus.

3. Unité de traitement dentaire selon la revendication 2, **caractérisée** en ce que les servomoteurs possèdent un mécanisme de désaccouplement qui peut être activé et désactivé par le dentiste au moyen du commutateur (18).

4. Unité de traitement dentaire selon l'une quelconque des revendications 1 à 3, **caractérisée** en ce que le commutateur (13) est un commutateur à main ou à pied, ou un détecteur de contact intégré dans un segment (2.1) du bras articulé (2, 12).

5. Unité de traitement dentaire selon l'une quelconque des revendications 2 à 4, **caractérisée** en ce que les capteurs sont des capteurs de déplacement.

6. Unité de traitement dentaire selon l'une quelconque des revendications 1 à 5, **caractérisée** en ce que des capteurs de position ou de pression (9) sont intégrés dans l'appuie-tête (70) du fauteuil de traitement (8), et ils sont reliés au calculateur de processus.

7. Unité de traitement dentaire selon la revendication 6, **caractérisée** en ce que l'appuie-tête (70) possède plusieurs segments (71, 72, 73, 74, 75, 76), en ce que les segments (71 à 76) peuvent être déplacés de façon commandée les uns par rapport aux autres au moyen de moteurs électriques (78, 79) ou encore de vérins hydrauliques ou pneumatiques, et en ce que des coussins gonflables (77) sont en outre éventuellement montés.

8. Unité de traitement dentaire selon l'une quelconque des revendications 1 à 7, **caractérisée** en ce qu'un capteur de pression et/ou un capteur d'humidité est prévu sur le tuyau d'aspiration (1, 11) ou encore sur le segment (2.1) maintenant le tuyau d'aspiration (1, 11).

9. Unité de traitement dentaire selon l'une quelconque des revendications 1 à 8, **caractérisée** en ce que le bras articulé (2, 12) est fixé à une plaque de montage (3, 13) qui est reliée au fauteuil de traitement (8) ou à l'appuie-tête (70) soit directement, soit par l'intermédiaire d'une console (6).

10. Unité de traitement dentaire selon la revendication 9, **caractérisée** en ce que la console (6), la plaque de montage (3, 13) et le bras articulé (2, 12) peuvent être rabattus de façon peu encombrante en dessous de l'appuie-tête (70) ou encore du dossier du fauteuil de traitement (8).
